(19) Europäisches Patentamt
European Patent Office
Office européen des brevets

(11) EP 1 364 986 A1

(12) EUROPEAN PATENT APPLICATION

(43) Date of publication:
26.11.2003 Bulletin 2003/48

(51) Int Cl.[7]: C08K 3/00, F16L 9/12

(21) Application number: 02011155.5

(22) Date of filing: 21.05.2002

(84) Designated Contracting States:
AT BE CH CY DE DK ES FI FR GB GR IE IT LI LU MC NL PT SE TR
Designated Extension States:
AL LT LV MK RO SI

(71) Applicant: Borealis Technology Oy
06101 Porvoo (FI)

(72) Inventor: The designation of the inventor has not yet been filed

(74) Representative: VA TECH Patente GmbH & Co
Stahlstrasse 21a
4031 Linz (AT)

# (54) Polypropylene compositions especially for pipes

(57) The invention relates to filled propylene compositions especially for pipes and pipe systems having increased impact and stiffness properties especially increased long term properties.

EP 1 364 986 A1

## Description

### Field of the invention

The invention relates to polypropylene compositions with high stiffness, high impact especially at low temperatures, good elongation properties and increased long-term properties.

### Background of the invention

Polymer materials are frequently used for pipes for various purposes, such as fluid transport, i.e. transport of liquid or gas, e.g. water such as drinking, sewage, drainage or waste water, during which the fluid also can be pressurized. Moreover, the transported fluid may have varying temperatures, usually within the temperature range of about 0 °C to 30° or up to about 70 °C. During installation the surrounding temperature may be as low as -20°C or even lower. For example, for industrial applications even both the fluid and the surrounding temperature may be as low as -20°C ore even lower. Such pipes are preferably made of polyolefins, usually polyethylene or polypropylene.

It is known that alpha-nucleated polypropylene has relatively high stiffness but is suffering in impact properties, especially at low temperatures e.g. at - 20°C. Stiffness may be increased by adding fillers like talc, mica and the like but at the same time with increasing amount of fillers the impact properties usually considerably fall.

Beta nucleated polypropylene generally has lower stiffness than alpha nucleated polypropylene, but the impact properties are considerably better. By filling beta- nucleated polypropylene with fillers which are known to be alpha-nucleating, such as talc, the alpha nucleation usually overrules the beta-nucleation and the superior impact properties are lost. Stiffness will increase with filler content but impact properties at the same time decrease. Further the long term properties and the elongation at break properties of filled polypropylene are considerably worse compared to polypropylenes which do not contain fillers.

It is known from WO 00/27911 to add talc and microsilica (15:1 to 1:15) to improve both stiffness and impact strength. Nevertheless the claimed compositions are not more than a compromise not reducing impact strength too much while keeping stiffness as high as possible as can be seen especially from figures 1 and 2. There is no indication about long time properties, such as pipe burst pressure tests, high levels of impact strength, elongation at break and stiffness which is decisive for use of such composition for example as pipes or sheets or fittings and the like.

The Austrian patent AT 404 294 B discloses a pressure pipe which consists of a homopolymer of polypropylene which consists predominantly of the hexagonal β-form of polypropylene with a nucleating agent which is based on an amide. These pipes have an increased resistance to rapid crack propagation.

The published Japanese patent application JP 05-170932 discloses polypropylene pipes for water supply purposes. It is disclosed, that by adding certain anti-oxidants to different kinds of polypropylene, the endurance time of these pipes can be increased.

None of these documents discloses polypropylene pipes with increased long-term properties, high stiffness and impact and elongation properties.

### Object of the Invention

It is therefore the object of the present invention to provide polypropylene compositions useful in the production of pipes with both increased impact and stiffness properties especially increased long term properties, which are comprised of a polypropylene composition.

This object has been solved by a polypropylene comprising propylene homopolymers with melt indices of 0.05 to 15 g/10 min at 230°C/2.16 kg or propylene block copolymers with 90.0 to 99.9 wt% propylene and 0.1 to 10 wt% α-olefins with 2 or 4 to 18 carbon atoms with melt indices of 0.05 to 20 g/10 min at 230°C/2.16 kg, or mixtures thereof, wherein the propylene homopolymers or propylene block copolymers are β-nucleated propylene polymers, whereby the β-nucleated propylene homopolymers have an IRτ >0.9, a tensile modulus of ≥1300 MPa at +23°C and a Charpy impact strength of ≥3 kJ/$m^2$ at -20°C using notched test specimens, and the β-nucleated propylene block copolymers are polymers having an IRτ of the propylene homopolymer block of >0.9, a tensile modulus of ≥900 MPa at +23 °C and a Charpy impact strength of ≥5 kJ/$m^2$ at -20°C, using notched test specimens and 1 - 70% of a filler, such as talc, calciumcarbonate, glass spheres, mica, wollastonite, wood flour, zincoxide, bariumsulfate, clay, the compositions having a β-crystalline phase of ≥ 30% and a pipe made thereof having a pressure test result of at least 40 hours at 80°C and 4.2 MPa in water in water.

It has surprisingly been found that pipes which are comprised of the above composition exhibit a remarkably improved behaviour where stiffness and impact strength and long term properties as well as elongation properties are concerned.

The basic β-nucleated propylene polymers are isotactic propylene polymers composed of chains in a $3_1$ helical

conformation having an internal microstructure of β-form spherulites being composed of radial arrays of parallel stacked lamellae. This microstructure can be realized by the addition of β-nucleating agents to the melt and subsequent crystallization. The presence of the β-form can be detected through the use of wide angle X-ray diffraction (Moore, J., Polypropylene Handbook, p. 134-135, Hanser Publishers Munich 1996).

The IRτ of the propylene polymers is determined by Infrared spectroscopy and calculated as described in EP 0 277 514 A2 on page 3.

The basic propylene homopolymers, repectively the propylene homopolymer block of the copolymers have an IRτ > 0.9, preferably >0.94, most preferably > 0.98.

The propylene homopolymers according to the present invention have melt indices of 0.05 to 15 g/10 min at 230°C/2.16 kg, preferably 0.1 to 8 g/10 min at 230°C/2.16 kg, most preferably 0.2 to 5 g/10 min at 230°C/2.16 kg.

The propylene copolymers according to the present invention have melt indices of 0.05 to 20 g/10 min at 230°C/2.16 kg, preferably 0.1 to 8 g/10 min at 230°C/2.16 kg, most preferably 0.2 to 5 g/10 min at 230°C/2.16 kg.

According to the present invention the basic propylene homopolymers show a tensile modulus ≥ 1300 MPa, preferably ≥1500 MPa, most preferably ≥1600 MPa and the propylene copolymers show a tensile modulus ≥ 900 MPa, preferably ≥1300 MPa and most preferably ≥1500 MPa.

The basic propylene homopolymers according to the present invention have a Charpy impact strength of ≥3 $kJ/m^2$ at -20°C, preferably 4 to 10 $kJ/m^2$ at -20°C, most preferably 5 to 10 $kJ/m^2$ at -20°C.

The basic propylene copolymers according to the present invention have a Charpy impact strength of ≥5 $kJ/m^2$ at -20°C, preferably ≥6kJ/m2 at -20°C, most preferably ≥9 $kJ/m^2$ at -20°C. Charpy impact strength of up to at least 60 $kJ/m^2$ is possible for the basic copolymers according to the invention.

The fillers may be present in an amount of 1 - 70%, preferably 3 - 60 %, most preferably 5 - 50% . Suitable fillers are talc, calciumcarbonate, glass spheres, mica, wollastonite, wood flour, zincoxide, bariumsulfate, clay and the like.

Preferred fillers are talc and/or calciumcarbonate.

If talc is used as filler, the talc has an average particle size of about ≤12 μm, preferably ≤ 9 μm, most preferably ≤ 7 μm, and a density of 2.5 - 2.9 $g/cm^3$. Talc may have alpha-nucleating properties, therefore preferably 1 - 50%, more preferably 4 - 30%, most preferably 7 - 25% of talc is added as a filler. Calciumcarbonate has an average particle size of ≤ 8 μm preferably ≤ 5 μm, most preferably ≤ 3 μm. The amount of calciumcarbonate in the composition is 1 - 70%, preferably 10 - 70 %, most preferably 15- 60%.

The average particle size has to be limited to relatively low values, because with too large particles the good mechanical properties of the compositions are basically lost, because large particles tend to induce cracks. Further the impact properties are lowered as well as the long term properties.

The composition of the invention have a β-crystalline phase of at least 30% defined by DSC-measurement. Usually, if the β-crystalline fraction is determined by X-ray measurement higher values will be calculated, so the results are not directly comparable. The β-crystalline fraction determined by DSC measurement may be up to 70 - 90%.

The long term properties of pipe materials are normally evaluated utilizing accelerated tests, e.g. pipe burst pressure tests at higher temperatures. By using time/temperature superposition principles the expected lifetime of the pipe at service temperature could be estimated. Conventional non-pressure pipe systems and many pressurised systems have service temperatures of from around 30 degree C and down to normally around 0 degree C and sometimes even lower. By testing at 80 degree C and 4,2 MPa in water in water conditions according to ISO 1167; 1996(E), the properties at longer times at lower temperatures can be estimated. The time to burst in this test is a measure of the long term properties of the material.

According to the present invention, the time to burst is at least 40 hours, preferably at least 80 hours, more preferably at least 120 hours or most preferably at least 200 hours.

According to the present invention the Charpy impact strength of the ready made compounds for hompolymers are ≥2 $kJ/m^2$ at -20°C, preferably ≥3 $kJ/m^2$ at -20°C, more preferably ≥4 $kJ/m^2$ at -20°C, most preferably more preferably ≥5 $kJ/m^2$ at -20°C. For propylene copolymers the Charpy impact strength of the ready made compounds are ≥2 $kJ/m^2$ at -20°C, preferably ≥4 $kJ/m^2$ at -20°C, most preferably more preferably ≥6 $kJ/m^2$ at -20°C.

According to the present invention the filled propylene homopolymers show a tensile modulus ≥ 2000 MPa, preferably ≥2300 MPa, most preferably ≥2600 MPa and the filled propylene copolymers show a tensile modulus ≥ 1500 MPa, preferably ≥1900 MPa and most preferably ≥2100 MPa.

Elongation at break for the filled propylene polymers (on the ready made compound) is for compositions comprising talc as a filler ≥ 20%, preferably ≥ 30%, more preferably ≥ 40%, most preferably ≥ 80%.

Elongation at break for the filled propylene polymers (on the ready made compound) is for compositions comprising cacliumcarbonate as a filler ≥ 100%, preferably ≥ 150%, ≥ 200%.

According to an advantageous feature of the present invention the β-nucleated propylene polymers being propylene polymers obtained by polymerization with a Ziegler-Natta catalyst system comprising titanium-containing solid components, an organoalumina, magnesium or titanium compound as cocatalyst and an external donor according

to the formula

$$R_xR'_ySi(MeO)_{4-x-y},$$

wherein R and R' are identical or different and are branched or cyclic aliphatic or aromatic hydrocarbon residues, and y and x independently from each other are 0 or 1, provided that x + y are 1 or 2.

Examples of propylene polymers with an IRτ > 0.9, preferably > 0.94, most preferably > 0.98 obtained by polymerization with a Ziegler-Natta catalyst system, for example by slurry, bulk or gas phase polymerization, are propylene polymers as described in EP-A-0,790,262, WO 99/24,478 and WO 99/16,797.

A preferred external donor of the Ziegler-Natta catalyst system is dicyclopentyldimethoxysilane or cyclohexyldimethoxymethylsilane

According to a preferred embodiment the β-nucleated propylene polymer contains 0.01 to 2.0 wt%, in each case based on the propylene polymers used, of

- dicarboxylic acid derivative type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, preferably N,N'-di-$C_5$-$C_8$-cycloalkyl-2,6-naphthalene dicarboxamide compounds, N,N'-di-$C_5$-$C_8$-cycloalkyl-4,4-biphenyldicarboxamide compounds, N,N'-di-$C_5$-$C_8$-cycloalkylterephthalamide compounds, N,N'-di-$C_5$-$C_8$-cycloalkyl-1,4-cyclohexanedicarbox-amide compounds and/or N,N'-di-$C_6$-$C_{12}$-aryl-$C_5$-$C_8$-diamide compounds; and/or
- diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, preferably N,N'-$C_6$-$C_{12}$-arylene-bis-benzamide compounds, N,N'-$C_5$-$C_8$-cycloalkyl-bis-benzamide compounds, N,N'-p-$C_6$-$C_{12}$-arylene-bis-$C_5$-$C_8$-cycloalkylcarboxamide compounds and/or N,N'-$C_5$-$C_8$-cycloalkyl-bis-cyclohexanecarboxamide compounds; and/or
- amino acid derivative type diamide compounds from amidation reaction of $C_5$-$C_8$-alkyl-, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic mono-amines, preferably N-phenyl-5-(N-benzoylamino)pentaneamide and/or N-cyclohexyl-4-N-cyclohexylcarbonylamino) benzamide,

as β-nucleating agent.

Examples of N,N'-di-$C_5$-$C_8$-cycloalkyl-2,6-naphthalene dicarboxamide compounds are N,N'-dicyclohexyl-2,6-naphthalene dicarboxamide and N,N'-dicyclooctyl-2,6-naphthalene dicarboxamide.

Examples of N,N'-di-$C_5$-$C_8$-cycloalkyl-4,4-biphenyldicarboxamide compounds are N,N'-dicyclohexyl-4,4-biphenyldicarboxamide and N,N'-dicyclopentyl-4,4-biphenyldicarboxamide.

Examples of N,N'-di-$C_5$-$C_8$-cycloalkylterephthalamide compounds are N,N'-dicyclohexylterephthalamide and N, N'-dicyclopentylterephthalamide.

Examples of N,N'-di-$C_5$-$C_8$-cycloalkyl-1,4-cyclohexanedicarboxamide compounds are N,N'-dicyclohexyl-1,4-cyclohexanedicarboxamide and N, N'-dicyclohexyl-1,4-cyclopentanedicarboxamide.

Examples of N,N'-di-$C_6$-$C_{12}$-aryl-$C_5$-$C_8$-diamide compounds are N,N'-bis(p-methylphenyl)-hexanediamide, N,N'-bis(4-cyclohexylphenyl)hexanediamide, N,N'-diphenylhexanediamide, N,N'-diphenyloctanediamide and N,N'-bis (p-ethylphenyl)hexanediamide.

Examples of N,N'-$C_6$-$C_{12}$-arylene-bis-benzamide compounds are N,N'-p-phenylene-bis-benzamide and N, N'-1,5-naphthalene-bis-benzamide.

Examples of N,N'-$C_5$-$C_8$-cycloalkyl-bis-benzamide compounds are N,N'-1,4-cyclopentane-bis-benzamide and N,N'-1,4-cyclohexane-bis-benzamide.

Examples of N,N'-p-$C_6$-$C_{12}$-arylene-bis-$C_5$-$C_8$-cycloalkylcarboxamide compounds are N,N'-1,5-naphthalene-bis-cyclohexanecarboxamide and N,N'-1,4-phenylene-bis-cyclohexanecarboxamide.

Examples of N,N'-$C_5$-$C_8$-cycloalkyl-bis-cyclohexanecarboxamide compounds are N,N'-1,4-cyclopentane-bis-cyclohexanecarboxamide and N, N'-1,4-cyclohexane-bis-cyclohexanecarboxamide.

According to a further preferred embodiment the β-nucleated propylene polymer contains 0.0001 to 2.0 wt% of quinacridone type compounds, especially quinacridone, dimethylquinacridone and/or dimethoxyquinacridone; quinacridonequinone type compounds, especially quinacridonequinone, a mixed crystal of 5,12-dihydro(2,3b)acridine-7,14-dione with quino(2,3b)acridine-6,7,13,14-(5H,12H)-tetrone as disclosed in EP-B 0 177 961 and/or dimethoxyquinacridonequinone; and/or dihydroquinacridone type compounds, especially dihydroquinacridone, di-methoxydihydroquinacridone and/or dibenzodihydroquinacridone, as β-nucleating agent.

According to a further preferred embodiment the β-nucleated propylene polymer contains 0.01 to 2.0 wt% of dicarboxylic acid salts of metals from group IIa of periodic system, especially pimelic acid calcium salt and/or suberic acid calcium salt; and/or mixtures of dicarboxylic acids and salts of metals from group IIa of periodic system, as β-nucleating agent.

According to a further preferred embodiment the β-nucleated propylene polymer contains 0.01 to 2.0 wt% of salts of metals from group IIa of periodic system and imido acids of the formula

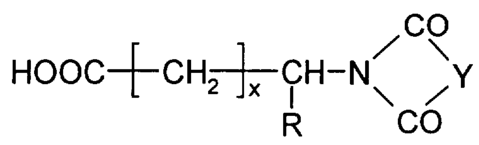

wherein x = 1 to 4; R = H, -COOH, $C_1$-$C_{12}$-alkyl, $C_5$-$C_8$-cycloalkyl or $C_6$-$C_{12}$-aryl, and Y = $C_1$-$C_{12}$-alkyl, $C_5$-$C_8$-cycloalkyl or $C_6$-$C_{12}$-aryl - substituted bivalent $C_6$-$C_{12}$-aromatic residues, especially calcium salts of phthaloylglycine, hexahydrophthaloylglycine, N-phthaloylalanine and/or N-4-methylphthaloylglycine, as β-nucleating agent.

The inventive composition with improved properties may contain usual auxiliary materials such as 0.01 to 2.5 wt% stabilizers, and/or 0.01 to 1 wt% processing aids, and/or 0.1 to 1 wt% antistatic agents and/or 0.2 to 3 wt% pigments, in each case based on the propylene polymers used.

The stabilizers, contained in the inventive propylene polymers, preferably are mixtures of 0.01 to 0.6 wt% phenolic antioxidants, 0.01 to 0.6 wt% 3-arylbenzofuranones, 0.01 to 0.6 wt% processing stabilizers based on phosphites, 0.01 to 0.6 wt% high temperature stabilizers based on disulfides and thioethers and/or 0.01 to 0.8 wt% sterically hindered amines (HALS).

Pellets of the propylene polymer as defined and prepared as described above were fed together with the filler into the first inlet of a conventional kneader (e.g. Buss Co-kneader 100 MDK/E-11 L/D., i.e. a single screw mixer with a downstream discharge single screw extruder with a pelletising unit with water cooling.
The complete homogenization can also be made in one step for example in a twin extruder or a Buss co-kneader in one step. Pipes are then extruded from the pellets produced as described above.
Alternatively both complete homogenization as described and the pipe extrusion can be made in one step.

**Definition of pipe**

The term "pipe" as used herein is meant to encompass pipes in a broader sense, as well as supplementary parts like fittings, valves, chambers and all parts which are commonly necessary for e.g. a sewage piping system.
Pipes according to the invention also encompass single and multilayer pipes, where for example one or more of the layers is a metal layer and which may include an adhesive layer. Other constructions of pipes, e.g. corrugated pipes, double wall pipes with or without hollow sections, are possible as well.

The propylene compositions used for pipes according to the invention may contain usual auxiliary materials, e.g. 0.01 to 2.5 wt% stabilizers and/or 0.01 to 1 wt% processing aids and/or 0.1 to 1 wt% antistatic agents and/or 0.2 to 3 wt% pigments and/or up to 50% reinforcing agents, e.g. glass fibres, aramide fibers in each case based on the propylene composition used.
For the present invention coloration of the propylene composition is largely irrelevant, however certain pigments, e.g. pigments which are highly active α-nucleating agents, cannot be utilised.

**Production of the Pipes**

Pipes according to the invention were produced feeding the composition as described above in pellet form into a conventional Cincinnati pipe extruder for extrusion with a line speed around 1 m/min into diameter 32 mm pipes with a wall thickness of 3 mm, respectively into diameter 110 mm pipes with a wall thickness of 4 mm.

The extruders for producing the pipes can be standard pipe extruders, such as single screw extruders with an L/D of 20 to 40 or twin screw extruders or extruder cascades of homogenizing extruders (single screw or twin screw). Optionally, a melt pump and/or a static mixer can be used additionally between the extruder and the ring die head. Ring shaped dies with diameters ranging from approximately 16 to 2000 mm and even grater are possible.

After leaving the annular die, the pipe is taken off over a calibrating mandrel, usually accompanied by cooling of the pipe by air cooling and/or water cooling, optionally also with inner water cooling.

In the production of multilayer pipes according to the invention conventional extruders are suitable. For example, the polyolefin layers may be manufactured with single screw extruders with an L/D of 20 to 40 or twin screw extruders or other types of extruders, suitable for multilayer extrusion, as described for example in US 5,387 386 and FI 83 184. Optionally, a melt pump and/or a static mixer can be used additionally between the extruder and the ring

die head. Ring shaped dies with diameters ranging from approximately 20 to 2000 mm and even greater are possible. Advantageous die temperatures for discharging the melt are 180 to 240°C. After leaving the ring-shaped die, the polyolefin multilayer plastic pipes are taken off over a calibrating sleeve and cooled.

The multilayer pipe can also be manufactured in extrusion winding processes in diameters up to 3 - 4 meters or even larger.

The pipes may also be processed in corrugating devices in combination or close to the calibration step, for example for manufacturing of multilayer pipes of corrugated double/triple wall design with or without hollow sections or multilayer pipes with ribbed design.

The known methods of multilayer pipe extrusion or injection molding are described for instance, in Djordjevic, D., "Coextrusion", Rapra Review Reports, Vol. 6, No. 2, 1992, pp 51-53, or Plastic Extrusion technology, Hanser Publishers 1997, Chapter 3 (F. Hensen).

### Description of measurement methods

### Determination of β-crystallinity

The β-crystallinity was determined by Differential Scanning Calorimetry (DSC). DSC was run according to ISO 3146 / part 3 / method C2 with a scan rate of 10 °C/min. The amount of β-modification was calculated from the second heat by the following formula:

$$\beta\text{-area} / (\alpha\text{-area} + \beta\text{-area})$$

Since the thermodynamical instable β-modification starts to be changed into the more stable α-modification at temperatures above 150°C, a part of the β-modification is transferred within the heating process of DSC-measurement. Therefore the amount of β-PP determined by DSC is lower as when measured according to the method of Turner-Jones by WAXS (A. Turner-Jones et. al., Makromol. Chem 75 (1964) 134).

"Second heat" means, that the sample is heated according to ISO 3146 / part 3 / method C2 for a first time and then cooled to room temperature at a rate of 10 °C/min. The sample is then heated a second time, also according to ISO 3146 / part 3 / method C2. This second heat is relevant for measurement and calculation of the composition as such, i.e. it is possible to compare the samples regardless of the way the samples were originally manufactured

The "first heat is relevant for comparison of the mechanical/physical properties oft the final product, such as pipes etc.

The minimum between the 2 peaks of the first and second heat s divided by a straight line to the base line to determine α-area and β-area. In case of block copolymers the PE-area is excluded from the β-area.

### MFR

The melt flow rates were measured with a load of 2.16 kg at 230 °C. The melt flow rate is that quantity of polymer in grams which the test apparatus standardized to ISO 1133 extrudes within 10 minutes at a temperature of 230 °C under a weight of 2.16 kg.

### Tensile modulus

The tensile modulus was determined on 4 mm thick samples according to the method of ISO 527-2/1B at 1mm/min and 23°C. The compression moulded test specimens were made in a positive mould according to ISO 1873-2.

### Charpy impact strength

The notched charpy impact strength was carried out according to ISO 179 / 1eA at -20 °C by using compression moulded test specimens as described in EN ISO 1873-2 (80 x 10 x 4 mm).

### Pipe burst pressure test

is performed according to ISO 1167; 1996 (E) on diameter 32 mm pipes with a wall thickness of 3.0 mm. The circumferential stress was 4.2 MPa and the test temperature was 80°C, in water in water conditions. The time to burst was measured.

**Ring stiffness**

Ring stiffness is determined according to EN 9969 pipes having a diameter of 110 mm and a wall thickness of 4mm at 23°C.. The E modulus is calculated according to:

$$E = \text{Ring stiffness} \times 12 \times \left(\frac{D-t}{t}\right)^3$$

**Pipe falling weight impact**

is determined according to EN 1411 on diameter 110 mm pipes with a wall thickness of 4 mm at 0°C. The $H_{50}$ value in meters is calculated.

**Elongation at break**

is determined according to ISO 527/2/5A at 50 mm/min and 23°C on 4 mm thick compression moulded samples prepared according to EN ISO 1873-2 as described above.

**Examples**

**Exemplary Method 1**

A mixture of 75 wt% of a propylene block copolymer, obtained by combined bulk and gas phase polymerization using a Ziegler-Natta catalyst system with dicyclopentyldimethoxysilane (D-Donor) as external donor, having an ethylene content of 8.3 wt%, an IRτ of the propylene homopolymer block of 0.985 and a melt index of 0.30 g/10 min at 230°C/2.16 kg, 25 wt% of a master batch comprising 99.5 parts by weight of a propylene block copolymer having an ethylene content of 8.3 wt%, an IRτ of the propylene homopolymer block of 0.987 and a melt index of 0.30 g/10 min at 230 °C/2.16 kg, and 0.5 parts by weight of quinacridone and 0.1 wt% calcium stearate, 0.1 wt% tetrakis[methylene (3,5-di-t-butylhydroxyhydrocinnamate)]methane and 0.1 wt% tris-(2,4-di-t-butylphenyl)phosphite, and the desired amount of the fillerbased on the sum of the propylene polymers used, is melted in a twin screw extruder with a temperature profile of 100/145/185/210/220/ 200/ 185°C, homogenized, discharged and pelletized.

**Exemplary Method 2**

75 wt% of a propylene block copolymer, obtained by combined bulk and gas phase polymerization using a Ziegler-Natta catalyst system with cyclohexyldimethoxymethylsilane (C-donor) as external donor, having an ethylene content of 8.3 wt%, an IRτ of the propylene homopolymer block of 0.985 and a melt index of 0.30 g/10 min at 230°C/2.16 kg, 25 wt% of a master batch comprising 99.5 parts by weight of a propylene block copolymer having an ethylene content of 8.3 wt%, an IRτ of the propylene homopolymer block of 0.987 and a melt index of 0.30 g/10 min at 230 °C/2.16 kg, and 0.5 parts by weight of quinacridone and 0.1 wt% calcium stearate, 0.1 wt% tetrakis[methylene(3,5-di-t-butylhydroxyhydrocinnamate)]methane and 0.1 wt% tris-(2,4-di-t-butylphenyl)phosphite, and the desired amount of the filler based on the sum of the propylene polymers used, is melted in a twin screw extruder with a temperature profile of 100/145/185/210/220/ 200/ 185°C, homogenized, discharged and pelletized.

**Exemplary Method 3**

A mixture of 95 wt% of a propylene homopolymer, obtained by bulk phase polymerization using a Ziegler-Natta catalyst system with dicyclopentyldimethoxysilane as external donor (D-donor), having an IRτ of 0.987, and a melt index of 0.3 g/10 min at 230°C/2.16 kg,
5 wt% of a master batch comprising 97.5 parts by weight of a propylene homopolymer having an IRτ of 0.987 and a melt index of 0.3/10 min at 230 °C/2.16 kg, and 1.0 parts by weight quinacridone and 0.05 wt% calcium stearate, 0.1 wt% tetrakis[methylene(3,5-di-t-butylhydroxyhydrocinnamate)]methane and 0.1 wt% tris-(2,4-di-t-butylphenyl)-phosphite and the respective amount of the filler based on the sum of the propylene polymers used, is melted in a twin screw extruder with a temperature profile of 100/145/190/215/225/205/190°C, homogenized, discharged and pelletized.

**Exemplary Method 4**

A mixture of 95 wt% of a propylene homopolymer, obtained by bulk phase polymerization using a Ziegler-Natta catalyst system with cyclohexyldimethoxymethylsilane as external donor (C-Donor), having an IRτ of 0.987, and a melt index of 0.3 g/10 min at 230°C/2.16 kg,
5 wt% of a master batch comprising 97.5 parts by weight of a propylene homopolymer having an IRτ of 0.987 and a melt index of 0.3/10 min at 230 °C/2.16 kg, and 0.7 parts by weight of quinacridone and 0.05 wt% calcium stearate, 0.1 wt% tetrakis[methylene(3,5-di-t-butylhydroxyhydrocinnamate)]methane and 0.1 wt% tris-(2,4-di-t-butylphenyl)-phosphite, and the desired amount of the filler based on the sum of the propylene polymers used, is melted in a twin screw extruder with a temperature profile of 100/145/190/215/225/205/190°C, homogenized, discharged and pelletized.

According to one of the exemplary methods described above the following compositions and pipes were made and tested.
It is to be understood that different basic polymers may be used in preparing the compositions according to the invention.

Table 1

| | Comparative Example | 1 | 2 | 3 | Comparative Example | 4 | 5 | 6 | 7 |
|---|---|---|---|---|---|---|---|---|---|
| Type (analogous examplary method) | 3 | 4 | 3 | 3 | 1 | 2 | 1 | 1 | 1 |
| Donor | D | C | D | D | D | C | D | D | D |
| IRtau | 0,987 | 0,96 | 0,987 | 0,985 | 0,985 | 0,95 | 0,985 | 0,985 | 0,985 |
| MFR2, 230 degree C (g/10min) | 0,3 | 0,3 | 0,3 | 0,3 | 0,3 | 0,3 | 0,3 | 0,3 | 0,3 |
| ß-nucleating agent | Quinacridone | Quinacridone | Quinacridone | Quinacridone | Quinacridone | Quinacridone | Quinacridone | Quinacridone | Quinacridone |
| Filler, average partice size; Talc: 6um, CaCO3: 1,5 um | 0 | talc 10% | talc 10% | CaCO3 40% | 0 | talc 10% | talc 10% | CaCO3 10% | CaCO3 30% |
| MFR, composition, 230 degree C (g/10min) | 0,3 | 0,3 | 0,3 | 0,4 | 0,3 | 0,3 | 0,3 | 0,3 | 0,4 |
| DSC, % ß ( 2nd Heat ) | 80% | 41% | 44% | 81% | 81% | 52% | 54% | 79% | 80% |
| | | | | | | | | | |
| Compression moulded sheet | | | | | | | | | |
| E-modul (speed 1mm/min), (MPa) | 1750 | 2000 | 2500 | 2200 | 1400 | 2100 | 2200 | 1500 | 1900 |
| Charpy -20°C, (kJ/m2) | 8,4 | 3,5 | 4 | 3,9 | 37 | 3,8 | 6 | 8,1 | 7 |
| Elongation at break (speed 50mm/min), (%) | 430% | 34% | 28% | 150% | 460% | 41% | 32% | 370% | 128% |
| | | | | | | | | | |
| Pipe, diam 110x4,0 mm (pressure testing, diam. 32x3,0 mm) | | | | | | | | | |
| DSC, % ß ( 1st Heat ) in the middle of the pipe wall | 56 | 43 | 41 | 52 | 55 | 36 | 34 | 41 | 55 |
| DSC, % ß ( 1st Heat ) average pipe wall | 51 | 41 | 39 | 42 | 50 | 27 | 29 | 27 | 43 |
| Pressure testing (80°C / 4,2MPa), hours to break | > 1000 | 250 | >240 | 170 | 180 | 190 | 330 | 240 | 51 |
| Ring stiffness (kN/m2) | 7,2 | 8,5 | 10,2 | 10,7 | 5,5 | 7,7 | 8,6 | 4,5 | 7,3 |
| E-modulus from ring stiffness (MPa) | 1600 | 1900 | 2300 | 2400 | 1200 | 1700 | 1900 | 1000 | 1600 |
| Falling weight Impact, pipe , H50 (m) | >4,2 | 1,8 | 0,2 | 4 | >4,2 | >4,2 | >4,2 | >4,2 | >4,2 |

## Claims

1. Polypropylene comprising propylene homopolymers with melt indices of 0.05 to 15 g/10 min at 230°C/2.16 kg or propylene block copolymers with 90.0 to 99.9 wt% propylene and 0.1 to 10 wt% α-olefins with 2 or 4 to 18 carbon atoms with melt indices of 0.05 to 20 g/10 min at 230°C/2.16 kg, or mixtures thereof, wherein the propylene homopolymers or propylene block copolymers are β-nucleated propylene polymers, whereby the β-nucleated propylene homopolymers have an IRτ >0.9, a tensile modulus of ≥1300 MPa at +23°C and a Charpy impact strength of ≥3 kJ/$m^2$ at -20°C using notched test specimens, and the β-nucleated propylene block copolymers are polymers having an IRτ of the propylene homopolymer block of >0.9, a tensile modulus of ≥900 MPa at +23 °C and a Charpy impact strength, of ≥5 kJ/$m^2$ at -20°C, using notched test specimens and 1 - 70% of a filler, such as talc, calciumcarbonate, glass spheres, mica, wollastonite, wood flour, zincoxide, bariumsulfate, clay, the compositions having a β-crystalline phase determined by DSC of at least 30 % and a pipe made thereof having a burst pressure test result of at least 40 hours at 80°C and 4.2 MPa.

2. Propylene composition according to claim1, comprising a β- crystalline phase determined by DSC up to 90 %.

3. Polypropylene composition according to one of claims 1 or 2 comprising 1- 70 % of talc and/or calciumcarbonate.

4. Polypropylene composition according one of claims 1 - 3 comprising 1- 50 % of talc having a average particle size ≤ 12μm.

5. Polypropylene composition according to one of the claims 1 to 3 , comprising 1- 70 % calciumcarbonate having an average particle size ≤ 8 μm.

6. Propylene composition according to one of claims 1 - 5, comprising a β-crystalline phase of up to 90%.

7. Propylene composition according to one of claims 1 to 6, wherein the polypropylene homopolymers respectively the propylene homopolymer block of the copolymer has an IRτ >0.94.

8. Propylene composition according to one of claims 1 - 7, wherein the polypropylene homopolymers respectively the propylene homopolymer block of the copolymer has an IRτ >0.98.

9. Use of the propylene compositions according to one of claims 1- 8 for pipes, valves, fittings, chambers and the like for various purposes, such as fluid transport, i.e. transport of liquid or gas, e.g. water such as drinking, sewage or waste water, during which the fluid also can be pressurized.

European Patent Office

# EUROPEAN SEARCH REPORT

Application Number
EP 02 01 1155

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 100 30 400 A (IDEMITSU PETROCHEMICAL CO ;TOYOTA MOTOR CO LTD (JP)) 15 February 2001 (2001-02-15) * claims 1-9 * | 1-8 | C08K3/00 F16L9/12 |
| A | DATABASE WPI Section Ch, Week 199320 Derwent Publications Ltd., London, GB; Class A18, AN 1993-164635 XP002219181 & JP 05 098092 A (MITSUI TOATSU CHEM INC), 20 April 1993 (1993-04-20) * abstract * | 1-8 | |

TECHNICAL FIELDS SEARCHED (Int.Cl.7)
C08K
F16L

The present search report has been drawn up for all claims

| Place of search | Date of completion of the search | Examiner |
|---|---|---|
| THE HAGUE | 1 November 2002 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 1155

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2002

| Patent document cited in search report | | Publication date | Patent family member(s) | Publication date |
|---|---|---|---|---|
| DE 10030400 | A | 15-02-2001 | DE 10030400 A1 | 15-02-2001 |
| JP 5098092 | A | 20-04-1993 | NONE | |

EPO FORM P0459

For more details about this annex : see Official Journal of the European Patent Office, No. 12/82